# EUROPÄISCHE PATENTSCHRIFT

(11) **EP 1 205 648 B1**
(45) Veröffentlichungstag und Bekanntmachung des Hinweises auf die Patenterteilung: **15.03.2006**
(21) Anmeldenummer: 01122604.0
(22) Anmeldetag: 26.09.2001
(51) Int. Cl.: F01N 3/08, F01N 3/20, F02D 41/02, F02D 41/14, F02D 41/34

(54) **Verfahren und Vorrichtung zur Katalysatorbeheizung**
Method and arrangement for a catalyst heating system
Procédé et dispositif pour le chauffage d'un catalysateur

(30) Priorität: 10.11.2000 DE 10055665
(43) Veröffentlichungstag der Anmeldung: 15.05.2002
(73) Patentinhaber: Volkswagen Aktiengesellschaft, 38436 Wolfsburg (DE)
(72) Erfinder: Pott, Ekkehard, Dr., 38518 Gifhorn (DE); Hahn, Hermann, Dr., 30175 Hannover (DE); Hinze, Sören, D-38102 Braunschweig (DE)
(74) Vertreter: Reinstädler, Diane

(56) Entgegenhaltungen:
- EP-A- 0 950 803
- EP-A- 0 971 101
- EP-A- 1 004 756
- EP-A- 1 026 382
- DE-A- 19 837 074
- US-A- 5 778 667

## Beschreibung

Die vorliegende Erfindung betrifft ein Aufheizverfahren für eine einer magerlauffähigen mehrzylindrigen Brennkraftmaschine nachgeschaltete Katalysatoreinrichtung gemäß dem Oberbegriffs des Anspruchs 1 und eine Abgasanlage zur Durchführung dieses Verfahrens.

Moderne Katalysatorsysteme bestehen aus zumindest einem motornah angeordneten kleinvolumigen Vorkatalysator und zumindest einem nachgeschalteten großvolumigen Hauptkatalysator. Bei magerlauffähigen Brennkraftmaschinen oder Motoren wird als Hauptkatalysator oftmals ein NOₓ-Speicherkatalysator eingesetzt, der bei magerer Betriebsweise Stickoxide einlagert, die bei intermittierenden Katalysatorregenerationen unter reduzierenden Bedingungen im fetten Abgas in unschädlichen Stickstoff umgewandelt werden. Der NOₓ-Speicherkatalysator wird hierbei gezielt entleert, damit er seine volle Absorptionsfähigkeit für Stickoxide zurückerhält, die mit zunehmender Stickoxidbeladung in der Magerphase kontinuierlich abnimmt.

Neben der Einlagerung von Stickoxiden sind jedoch stets auch unerwünschte Schwefeleinlagerungen zu verzeichnen, die zu einer schleichenden Vergiftung des Katalysators führen und dessen NOₓ-Einlagerungsfähigkeit allmählich verringern. Eine solche Sulfatvergiftung ist bei NOₓ-Speicherkatalysatoren jedoch im wesentlichen reversibel, sofern hinreichend hohe Katalysatortemperaturen von mehr als 600°C und ein hinreichend hohes Schadstoffangebot bei geringem Restsauerstoffgehalt vorliegen. Zur Gewährleistung einer stets ordnungsgemäßen Abgasreinigung wird daher in der Praxis durch Einstellung einer hinreichend hohen Katalysatortemperatur und Absenkung des Sauerstoffgehaltes im Abgas, d.h. Verringerung des Lambda-Wertes, bei hinreichend hohem Schadstoffgehalt in periodischen Abständen eine Entschwefelung oder De-Sutfatierung des NOₓ-Speicherkatalysators durchgeführt. Der Lambda-Wert im NOₓ Speicherkatalysator sollte hierbei unter 1,05, vorzugsweise jedoch unter 1,00, liegen, da eine De-Sulfatierung bei höheren Lambda-Werten gar nicht oder nur mit einer zu geringen Reaktionsgeschwindigkeit erfolgen würde, was mit unerwünschten langen De-Sulfatierungszeiten verbunden wäre. Mit zunehmender Katalysatortemperatur beschleunigt sich die De-Sulfatierungsgeschwindigkeit überproportional.

Bei einem NOₓ-Speicherkatalysatorsystem der beschriebenen Art dient der Vorkatalysator zu Beschleunigung des Anspringvorgangs nach einem Kaltstart und zur Unterstützung der NOₓ-Einlagerung bei tiefen Temperaturen von weniger als etwa 250°C. Der Vorkatalysator kann ferner zur Aufheizung des NOₓ-Speicherkatalysators auf seine Entschwefelungstemperatur eingesetzt werden, indem der Schadstoffanteil im Motorabgas nach Einstellung geeigneter Betriebsbedingungen für eine exotherme Schadstoffumsetzung auf dem Vorkatalysator gezielt erhöht wird, um die in den Schadstoffen gebundene chemische Energie auf dem Vorkatalysator in Wärmeenergie umzuwandeln, und dadurch zum Aufheizen des nachgeschalteten NOₓ₋Speicherkatalysators zu nutzen. Nachteilig bei dieser Vorgehensweise ist jedoch der auf dem Weg zwischen Vorkatalysator und NOₓ-Speicherkatalysator auftretende Wärmeverlust, so daß zum Erreichen der erforderlichen hohen De-Sulfatierungstemperaturen ein starkes Aufheizen des Vorkatalysators bis in einen Temperaturbereich erforderlich ist, bei dem die Gefahr einer Katalysatorschädigung besteht.

Günstiger ist es daher, die in den Abgasschadstoffen gebundene chemische Energie erst auf dem NOₓ-Speicherkatalysator in Wärmeenergie umzuwandeln. Bekannt sind dabei Bypasssysteme, die den Abgasstrom mit Hilfe zumindest einer Abgasklappe und zumindest einer zusätzlichen Abgasleitung um den Vorkatalysator herumführen.

Bekannt ist auch ein Fettbetrieb des Motors mit einer Eindüsung von Luft oder magerem Abgas zwischen dem Vorkatalysator und dem NOₓ-Speicherkatalysator.

Es ist auch bekannt, das Abgas eines Motors über zumindest zwei parallel geschaltete Vorkatalysatoren zu leiten, wobei die Vorkatalysatoren jeweils nur von einem Teil der Zylinder mit Abgas beaufschlagt werden. Das Abgas wird bei einem magerlaufenden Motor hierbei über eine Nacheinspritzung so angefettet, daß zumindest ein Vorkatalysator mit magerem Abgas und zumindest ein Vorkatalysator mit fettem Abgas beaufschlagt wird. Während an dem zumindest einen mager betriebenen Vorkatalysator die motorseitig anströmenden Abgasschadstoffe nahezu vollständig umgesetzt werden und hinter dem Vorkatalysator noch eine gewisse Menge an Restsauerstoff im Abgas vorliegt, kann in dem fett betriebenen Vorkatalysator nach vollständigem Sauerstoffverbrauch nicht der gesamte Schadstoffanteil umgesetzt werden, so dass dem nachgeschalteten Hauptkatalysator noch eine bestimmte Menge an Restsauerstoff und an Schadstoffen zugeführt wird, die erst auf dem Hauptkatalysator exotherm umgesetzt werden. Damit wird die Schadstoffumsetzung teilweise auf den Hautkatalysator verlagert, so dass die oben beschriebenen Probleme mit Wärmeverlusten in der Abgasleitung an Bedeutung verlieren. Die Nutzung einer Nacheinspritzung für diese Art der Katalysatoraufheizung ist jedoch recht aufwendig, da bei großen Nacheinspritzmengen Einflüsse auf das Motordrehmoment nicht auszuschließen sind. Zusätzlich kann sich die Umsetzung von Kohlenwasserstoffen im Magerbetrieb als problematisch erweisen.

Es ist auch bekannt (EP-A 0 971 101, EP-A 1 004 756 oder MTZ Motortechnische Zeitschrift 61, 3, 2000), die Hälfte der Zylinder eines Motors fett und die andere Hälfte mager zu betreiben und diese Abgase je einem Vorkatalysator zuzuführen. Die Vorkatalysatoren sind parallel zueinander in zugeordneten Abgaspfaden angeordnet, die vor einem nachgeschalteten NOₓ-Speicherkatalysator zu einem gemeinsamen Abgaspfad zusammengeführt werden. Die beiden Motorbänke mit jeweils der Hälfte der Zylinder werden hierbei im stöchiometrischen Betrieb gegenläufig ihn Richtung mager und fett vertrimmt, während das Summenabgas stöchiometrisch bleibt. Auch bei dieser Bankvertrimmung wird wiederum ein Teil der Schadstoffumsetzung von den Vorkatalysatoren auf den NOₓ₋Speicherkatalysator verlagert, um dort die erforderlichen hohen De-Sulfatisierungstemperaturen zu erzeugen oder ein unerwünschtes Abkühlen des NOₓ₋Speicherkatalysators zu verhindern.

Die Aufgabe der vorliegenden Erfindung besteht in einer Optimierung dieses bekannten Verfahrens in Hinblick auf die Temperaturführung in der Katalysatoreinrichtung, wobei nicht nur ein schnelles und zuverlässiges Aufheizen auf die gewünschte Hauptkatalysatortemperatur gewährleistet sein soll, sondern insbesondere auch eventuell katalysatorschädigende Temperaturen - sei es im Hauptkatalysator oder in den Vorkatalysatoren - zuverlässig vermieden werden sollen. Die Aufgabe besteht zudem in der Schaffung einer Abgasanlage zur Durchführung des Verfahrens.

Diese Aufgabe wird bei einem gattungsgemäßen Verfahren gemäß dem Oberbegriff des Anspruchs 1 zum einen dadurch gelöst, dass die Lambdawerte der den Vorkatalysatoren jeweils zugeführten Abgase oder eine Spreizung zwischen diesen in Abhängigkeit von einer gewünschten Temperatursteigerung der Katalysatoreinrichtung gesteuert wird. Auf diese Weise kann die Temperatur der Katalysatoreinrichtung, insbesondere die Hauptkatalysatortemperatur, durch entsprechende Betriebsweise der jeweiligen Zylinder über die Lambdawerte der den Vorkatalysatoren jeweils zugeführten Abgase bedarfsgerecht gesteuert werden, um durch optionale Ausnutzung der in dem Abgas chemisch gespeicherten Energie einen möglichst schnellen und katalysatorschonenden Temperaturanstieg auf das gewünschte Temperatumiveau zu erreichen und die gewünschte Katalysatorregeneration, wie z.B. eine De-Sulfatisierung oder eine NOₓ-Regeneration, durchführen zu können. Die Temperaturen und die Temperaturgradienten in den einzelnen Katalysatoren der Katalysatoreinrichtung können hierbei durch geeignete Wahl der Lambdawerte in den einzelnen Abgaspfaden unter Berücksichtigung und Minimierung der auftretenden Wärmeverluste selektiv eingestellt werden. Zur Begrenzung der Temperaturerhöhung, insbesondere zur Vermeidung eventueller katalysatorschädigender Übertemperaturen, wird die Differenz oder die Spreizung zwischen den Lambdawerten in den einzelnen Abgaspfaden hierbei aus sicherheitstechnischen Gründen betriebspunktabhängig auf einen Maximalwert begrenzt.

Die Differenz oder die Spreizung zwischen den Lambdawerten richtet sich im wesentlichen nach der gewünschten Temperatursteigerung im Hauptkatalysator, wobei der Maximalwert zum Schutz der Katalysatoreinrichtung vor übermäßig hohen Temperaturen in Abhängigkeit von der Hauptkatalysatortemperatur und/oder dem Temperaturgradienten im Hauptkatalysator und/oder dem Abgasmassenstrom festgelegt wird. Ergänzend können jedoch noch weitere sicherheitstechnisch relevante Einflussgrößen, wie z.B. Temperaturen oder die Temperaturgradienten in den Vorkatalysatoren, berücksichtigt werden.

Die Spreizung zwischen den Lambdawerten beträgt bis zu einer Hauptkatalysatortemperatur von 500°C vorzugsweise maximal etwa 0,85 bis 1,21.

Die Lambdawerte werden hierbei betriebspunktabhängig vorzugsweise so eingestellt, dass das Summenabgas vor dem Hauptkatalysator maximal etwa 4 kW an chemisch umsetzbarer Energie enthält.

Die Spreizung zwischen den Lambdawerten wird zur Vermeidung unerwünschter Übertemperaturen aus sicherheitstechnischen Gründen mit abnehmender Differenz zwischen einer bestimmten Soll-Hauptkatalysatortemperatur für den jeweiligen Regenerations- oder Aufheizvorgang und der ermittelten aktuellen Hauptkatalysatortemperatur und/oder mit steigenden Temperaturgradienten im Hauptkatalysator verringert, wobei vorzugsweise oberhalb einer Hauptkatalysatortemperatur von etwa 700 - 770°C insbesondere etwa 720°C, und/oder eines Temperaturgradienten von mehr als 300 K/min keine Spreizung zwischen den Lambdawerten mehr erfolgt. Unterhalb eines Temperaturgradienten im Hauptkatalysator von etwa 150 K/min erfolgt, hingegen vorzugsweise noch keine Einengung der Spreizung zwischen den Lambdawerten in den einzelnen Abgaspfaden.

Eine ergänzende Ausgestaltung besteht darin, daß die Vorkatalysatoren bei einem gattungsgemäßen Verfahren von einer unterschiedlichen Anzahl von Zylindern mit Abgas beaufschlagt werden, so daß ihnen jeweils unterschiedlich hohe Abgasmassenströme mit unterschiedlichen Schadstoffmengen zugeführt werden, die durch geeignete Wahl des jeweiligen Sauerstoffgehaltes eine optimale Einstellung der Abgaszusammensetzung zur Erreichung einer hohen Energiefreisetzung auf dem Hauptkatalysator ermöglichen. Dieses sehr flexible Verfahren zur selektiven Steuerung der Energiefreisetzung auf der Katalysatoreinrichtung und zu deren Aufheizung ist insbesondere für Brennkraftmaschinen mit mehr als 4 Zylindern geeignet, es kann jedoch auch für 4-Zylindermotoren nutzbringend angewendet werden, da es einfacher und leichter als die aus dem Stand der Technik bekannte Bankvertrimmung der Zylinder zu applizieren ist. So kann beispielsweise einem Vorkatalysator von einem Zylinder fettes Abgas mit viel Kohlenmonoxid und Wasserstoff zugeführt werden, während ein parallel geschalteter Vorkatalysator mit schadstoffarmem und leichter oxidierbarem Abgas dreier mager betriebener Zylinder beaufschlagt wird. Da auf dem fett betriebenen Vorkatalysator infolge des geringen Sauerstoffgehaltes lediglich eine geringe Schadstoffmenge und auf dem mager betriebenen Vorkatalysator infolge des geringen Schadstoffgehaltes lediglich eine geringe Sauerstoffmenge umgesetzt wird, wird der jeweils verbleibende größere Anteil an Schadstoffen und Sauerstoff dem nachgeschalteten Hauptkatalysator zugeführt, wo er exotherm umgesetzt wird und unter optimaler Energieausnutzung die gewünschte Temperatursteigerung bewirkt.

Es ist jedoch auch denkbar, jeden der Zylinder über einen jeweils zugeordneten Abgaspfad mit einem Vorkatalysator zu verbinden und die Schadstoffumsetzung auf dem nachgeschalteten Hauptkatalysator bzw. die dadurch hervorgerufene Temperatursteigerung über die Anzahl der fett bzw. mager betriebenen Zylinder und Vorkatalysatoren zu steuern, wobei ein Teil der Zylinder je nach Bedarf gegebenenfalls im wesentlichen auch stöchiometrisch betrieben werden kann.

Zur Gewährleistung einer optimalen Schadstoffumsetzung ist es vorteilhaft, die Zylinder so zu betreiben, daß im Mittel aller Zylinder ein im wesentlichen stöchiometrisches Abgas mit λ ≈ 1 bereitgestellt wird.

Die Zylinder werden hierbei mittels einer zugehörigen Steuerungseinrichtung bedarfsgerecht gesteuert. Die Steuerung erfolgt betriebspunktabhängig, wobei die Einstellung der Lambdawerte insbesondere in Abhängigkeit von der ermittelten Beladung des Hauptkatalysators mit Schwefel und/oder Stickoxiden; der aktuellen Fahrsituation, wie z.B. die Fahrgeschwindigkeit, die Drehzahl, ein Drehzahlgradient usw.; der ordnungsgemäßen Funktionsweise sicherheits- oder abgasrelevanter Bauteile, wie z.B. das Einspritzsystem oder eine Drosselklappe; dem jeweiligen Schadstoff- und Sauerstoffgehalt des Abgases; und dem aktuellen Temperaturverlauf in der Katalysatoreinrichtung, insbesondere die Hauptkatalysatortemperatur und eine gewünschte Soll-Hauptkatalysatortemperatur, erfolgt. Die erforderlichen Informationen über die Abgasqualität und den Temperaturverlauf in der Katalysatoreinrichtung erhält die Steuerungseinrichtung aus den Meßsignalen angeschlossener Lambdasonden, NOₓ₋Sensoren und Temperaturfühler, die nachstehend noch ausführlicher beschrieben werden.

Der Sauerstoffgehalt des Abgases in den einzelnen Abgaspfaden wird insbesondere über jeweils zugeordnete Lambdasonden überwacht, die vorzugsweise den Vorkatalysatoren und dem Hauptkatalysator einfach jeweils vorgeschaltet und/oder nachgeschaltet sind. Alternativ hierzu können Abgaspfade jedoch auch über einen Verbindungspfad miteinander verbunden sein und über eine in dem Verbindungspfad angeordnete gemeinsame Lambdasonde überwacht werden, die mit Abgas aus beiden angeschlossenen Pfaden beaufschlagt wird. Eine weitere bevorzugte Verfahrensvariante kann jedoch auch darin bestehen, den erwünschten mittleren Sauerstoffgehalt zur Aufheizung des Hauptkatalysators mittels zumindest einer stromab einer Zusammenführung der parallelen Abgaspfade zu einem gemeinsamen Abgaspfad angeordneten Lambdasonde zu überwachen und einzustellen, die dem Hauptkatalysator vor- und/oder nachgeschaltet sein kann. Die parallelen Abgaspfade können hierbei zumindest teilweise ebenfalls mit Lambdasonden ausgerüstet sein. Bei den angegebenen bevorzugten Ausführungsbeispielen kann der fett oder mager betriebene Vorkatalysator durch geeignete Betriebsweise der Zylinder mit einer bestimmten Soll-Lambdavorgabe betrieben werden, während das dem zugeordneten mager bzw. fett betriebenen Vorkatalysator zugeführte Abgas auf einen gewünschten mittleren Lambdawert geregelt wird. Entsprechendes gilt auch für die Verwendung mehrerer fett oder mager betriebener Vorkatalysatoren. Falls erforderlich, kann dem auf den gewünschten mittleren Lambdawert geregelte Abgas, insbesondere bei einem mittleren stöchiometrischen Betrieb mit λ ≈ 1, über einen Wobble auch eine Zwangsamplitude aufgeprägt werden.

Zur Sicherstellung einer ausreichenden Katalysatorschonung wird vorzugsweise die Betriebsweise der einzelnen Zylinder beim Aufheizen nach einer bestimmten Anzahl an Aufheizvorgängen, insbesondere eins oder zwei, gewechselt, so daß die zugeordneten Vorkatalysatoren jeweils nur für eine entsprechende Anzahl an Aufheizvorgängen mit fettem bzw. magerem Abgas beaufschlagt werden. Durch diesen regelmäßigen Wechsel in der fett-mager-Betriebsweise der Zylinder und der zugeordneten Vorkatalysatoren werden die Vorkatalysatoren im zeitlichen Mittel im wesentlichen stöchiometrisch betrieben.

Es ist jedoch auch möglich, die Zylinder und die jeweils zugeordneten Vorkatalysatoren ohne einen entsprechenden Wechsel in der Betriebsweise beim Aufheizen stets nur fett bzw. nur mager zu betreiben und dabei speziell für eine fette bzw. magere Betriebsweise ausgelegte Vorkatalysatoren zu verwenden. Eine entsprechende Auslegung kann beispielsweise durch eine geeignete Wahl der Trägermaterialien und/oder der Volumina und/oder der Zellgeometrien und/oder der Zellzahlen und/oder der Trägermaterialstärken und/oder der Washcoats und/oder der jeweiligen Beschichtungen erfolgen. Die verwendeten Vorkatalysatoren können hierbei vorzugsweise für eine gute HC-Konvertierung im Magerbetrieb bzw. eine gute partielle HC → CO-Oxidation bei fetter Betriebsweise ausgelegt werden. Um den unterschiedlichen Betriebsbedingungen in den Vorkatalysatoren Rechnung zu tragen, können vorzugsweise auch Abgaspfade mit unterschiedlichen Abgaslauflängen zwischen der Brennkraftmaschine und den Vorkatalysatoren und/oder mit unterschiedlichen Querschnitten und/oder unterschiedlichen Trichterformen verwendet werden. Die erwähnte Zusammenführung der parallelen Abgaspfade zu einem gemeinsamen Abgaspfad kann hierbei vorzugsweise benachbart zu den Vorkatalysatoren oder benachbart zu dem Hauptkatalysator erfolgen. Für eine Zusammenführung der Abgaspfade dicht hinter den Vorkatalysatoren spricht der geringere Wärmeverlust einer einflutigen Abgasanlage sowie die bessere Durchmischung der Abgase aus den zusammengeführten Pfaden. Für eine Zusammenführung dicht vor dem Hauptkatalysator spricht dagegen, daß eventuelle Nachreaktionen in der Abgasanlage erst dicht vor oder bereits im Hauptkatalysator erfolgen und damit der auftretende Wärmeverlust bei der Ausnutzung der freiwerdenden Energie zur Katalysatoraufheizung minimiert wird.

Die mageren und die fetten Abgase entsprechend betriebener Zylinder werden vorzugsweise jeweils in einem gemeinsamen Abgaspfad zusammengeführt und einem zugeordneten Vorkatalysator zugeleitet. Es ist jedoch auch denkbar, einen oder mehrere einzelne Zylinder jeweils mit einem zugeordneten Abgaspfad mit Vorkatalysator zu verbinden.

Als Hauptkatalysator wird vorzugsweise ein NOₓ-Speicherkatalysator oder ein 3-WegeKatalysator verwendet.

Eine erfindungsgemäße Abgasanlage zur Durchführung dieses Verfahrens ist in den Ansprüchen 26 - 33 zu entnehmen.

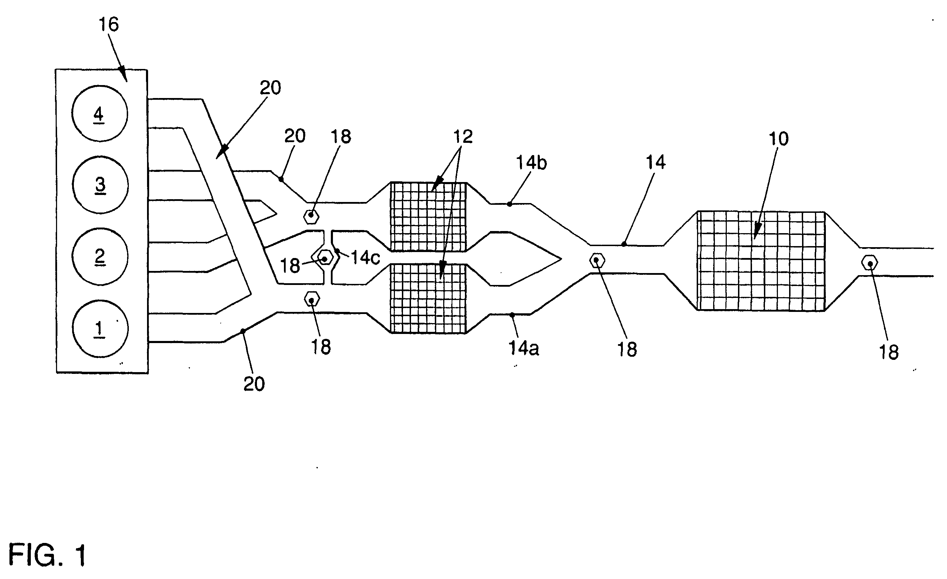

Weitere Merkmale und Vorteile des erfindungsgemäßen Verfahrens und der erfindungsgemäßen Abgasanlage zur Durchführung dieses Verfahrens ergeben sich nicht nur aus den zugehörigen Ansprüchen - für sich und/oder in Kombination - sondern auch aus der nachfolgenden Beschreibung eines bevorzugten Ausführungsbeispiels in Verbindung mit der zugehörigen
- Fig. 1: die eine schematische Darstellung eines 4-Zylinder-Motors mit einer nachgeschalteten erfindungsgemäßen Abgasanlage zeigt.

Die dargestellte efindungsgemäße Abgasanlage umfaßt einen großvolumigen NOₓ₋Speicherkatalysator 10 mit zwei parallel geschalteten kleinvolumigen Vorkatalysatoren 12 in zugeordneten Abgaspfaden 14a, 14b, die sich vor einem zugehörigen Motor oder einer Brennkraftmaschine 16 gabeln und über Krümmer 20 jeweils mit zwei Zylindern (1-4) dieser Brennkraftmaschine 16 verbunden sind. Der eine Abgaspfad 14a ist hierbei mit dem ersten und vierten Zylinder (1 bzw. 4) verbunden, während der andere Abgaspfad 14b mit dem zweiten und dritten Zylinder (2 bzw. 3) verbunden ist. Die beiden parallelen Abgaspfade 14a, 14b sind zudem vor den Vorkatalysatoren 12 über einen Verbindungspfad 14c miteinander verbunden. Hinter den Vorkatalysatoren 12 sind die beiden Abgaspfade 14a, 14b zu einem gemeinsamen Abgaspfad 14 zusammengeführt, in dem der NOₓ-Speicherkatalysator 10 angeordnet ist.

Der genaue Ort der Zusammenführung der parallelen Abgaspfade 14a, 14b zu einem gemeinsamen Abgaspfad 14 kann je nach Art und Dimensionierung der Abgasanlage 10, 12, 14 und der zugeordneten Brennkraftmaschine 16 beispielsweise durch Optimierungsrechnungen ermittelt werden. Für eine Zusammenführung der beiden Abgaspfade 14a, 14b benachbart zu den Vorkatalysatoren 12 spricht der geringere Wärmeverlust der dann einflutigen Abgasstrangs 14 und die bessere Durchmischung der Abgase aus den beiden parallelen Abgaspfaden 14a, 14b auf einem möglichst langen gemeinsamen Abgaspfad 14. Bei einer Zusammenführung benachbart zu dem NOₓ-Speicherkatalysator 10 hingegen erfolgen eventuelle Nachreaktionen im heißen Abgas erst unmittelbar vor oder sogar bereits in dem NOₓ Speicherkatalysator 10, so daß Wärmeverluste in dem gemeinsamen kurzen Abgaspfad 14 minimiert werden und nahezu die gesamte noch im Abgas chemisch gespeicherte Energie direkt auf dem NOₓ₋Speicherkatalysator 10 umgesetzt und dadurch optimal zu dessen. Aufheizung ausgenutzt wird.

Den beiden Vorkatalysatoren 12 ist in den zugeordneten Abgaspfaden 14a, 14b je eine Lambdasonde 18 zur Erfassung und Überwachung des Sauerstoffgehaltes des den Vorkatalysatoren 12 zugeführten Abgases vorgeschaltet. Zudem ist auch in dem Verbindungspfad 14c eine Lambdasonde 18 angeordnet. Außerdem ist auch dem NOₓ₋Speicherkatalysator 10 in dem gemeinsamen Abgaspfad 14 jeweils eine Lambdasonde 18 vor- und nachgeschaltet.

Dem NOₓ-Speicherkatalysator 10 und den beiden Vorkatalysatoren 12 sind femer noch je ein (nicht dargestellter) Temperaturfühler zur örtlichen Erfassung der Abgastemperatur vor- und nachgeschaltet, die nicht nur zur Steuerung der optimalen NOₓ-Einlagerung durch Überwachung eines optimalen Einlagerungs-Temperaturbereichs und gegebenenfalls Einleitung temperatursteigender Maßnahmen dienen, sondern auch zur Überwachung der für einen NOₓ-Regeneration oder De-Sulfatierung einzuhaltenden reaktionskinetisch- und sicherheitstechnisch bedingten Regenerations-Temperaturbereiche und der in den Katalysatoren 10, 12 auftretenden Temperaturgradienten. Durch einen Temperaturvergleich zwischen den in den NOₓ₋Speicherkatalysator 10 einströmenden und den ausströmenden Abgasen kann zudem die katalytische Aktivität des NOₓ-Speicherkatalysators 10 überwacht werden.

Dem NOₓ-Speicherkatalysator 10 ist zudem noch ein (nicht dargestellter) NOₓ-Sensor zur Messung der Stickoxidemission nachgeschaltet, der zur Bestimmung von Unregelmäßigkeiten der Katalysatoraktivität durch Erfassung von NOx-Durchbrüchen dient.

Die Lambdasonden 18, die Temperaturfühler und der NOₓ-Sensor sind mit einer (ebenfalls nicht dargestellten) Steuerungseinrichtung zur Erfassung und Auswertung der jeweiligen Meßsignale und zur bedarfsgerechten Steuerung der Zylinderbetriebsweise in Abhängigkeit von der Beladung des NOₓ-Speicherkatalysators 10 mit Schwefel und/oder Stickoxiden, der aktuellen Fahrsituation, der ordnungsgemäßen Funktionsweise sicherheits- oder abgasrelevanter Bauteile, dem Schadstoff- und Sauerstoffgehalt des Abgases, der Höhe des Abgasmassenstroms, dem aktuellen Temperaturverlauf in der Katalysatoreinrichtung 10, 12, insbesondere die Temperatur des NOₓ₋Speicherkatalysators 10, und einer gewünschten Soll-NOₓ₋Speicherkatalysatortemperatur verbunden.

Während des Betriebs der Brennkraftmaschine 16 wird mittels einer (nicht dargestellten) zugeordneten speziellen Einrichtung oder der bereits erwähnten Steuerungseinrichtung beispielsweise über den kumulierten Kraftstoffverbrauch seit einem letzten De-Sulfatierungsvorgang der Beladungszustand des NOₓ Speicherkatalysators 10 (und der Vorkatalysatoren 12) mit Schwefel bestimmt, wobei vereinfachend mit einer für die Praxis hinreichenden Genauigkeit von einer hundertprozentigen Effizienz bei der Schwefeleinlagerung und einem zu vernachlässigenden Abbau bei einer NOₓ₋Regeneration ausgegangen werden kann. Es sind jedoch auch andere Bestimmungsmöglichkeiten denkbar.

Zudem wird auf bekannte Art und Weise der Beladungszustand des NOₓ₋Speicherkatalysators 10 mit Stickoxiden bestimmt und die Katalysatoraktivität durch eine On-Board-Diagnose überwacht. Bei Überschreitung einer maximal zulässigen NOₓ- oder Schwefelbeladung oder beim Auftreten einer Unregelmäßigkeit der Katalysatoraktivität, die beispielsweise durch Messung von NOₓ-Durchbrüchen mittels des nachgeschalteten NOₓ-Sensors erfaßt wird, wird durch Überprüfung sicherheits- oder abgasrelevanter Bauteile auf ordnungsgemäße Funktionsweise und/oder der aktuellen Fahrsituation auf Einhaltung vorbestimmter Fahrparameter zunächst die Zulässigkeit einer entsprechenden Regenerationsmaßnahme überprüft.

Sollte sich beispielsweise infolge der berechneten hohen Schwefeleinlagerung ein De-Sulfatierungsvorgang als für erforderlich erweisen und eine entsprechende Maßnahme bei ordnungsgemäßer Funktionsweise der sicherheits- oder abgasrelevanten Bauteile und bei Einhaltung vorbestimmter Fahrparameter aktuellerweise auch zulässig sein, werden die Zylinder 1 und 4 bzw. 2 und 3 der Brennkraftmaschine 16 gegenläufig bis zur Erreichung der für den De-Sulfatierungsvorgang erforderlichen Lambda-Werte in Richtung fett bzw. mager vertrimmt, so daß dem einen Vorkatalysator 12 über den Abgaspfad 14a fettes Abgas und dem anderen Vorkatalysator 12 über den Abgaspfad 14b mageres Abgas zugeführt wird.

Die Differenz zwischen den Lambdawerten der Abgase in den beiden Abgaspfaden 14a, 14b oder die Spreizung der Lambda-Werte richtet sich hierbei im wesentlichen nach der gewünschten Temperatursteigerung im NOₓ-Speicherkatalysator 10. Zur Vermeidung eventueller katalysatorschädigender Übertemperaturen wird diese Spreizung jedoch in Abhängigkeit von der ermittelten Temperatur des NOₓ-Speicherkatalysators 10, der Temperaturdifferenz in diesem Katalysator 10 und dem Abgasmassenstrom auf einen Maximalwert begrenzt. Die Spreizung wird hierbei betriebspunktabhängig so eingestellt, daß das Abgas vor dem NOₓ-Speicherkatalysator 10 noch maximal etwa 4 kW an chemisch umsetzbarer Energie enthält. Bis zu einer Katalysatortemperatur von etwa 500°C ergibt sich hierdurch eine Spreizung zwischen den Lambdawerten von maximal etwa 0,85 - 1,21.

Die Spreizung zwischen den Lambdawerten in den einzelnen Abgaspfaden 14a, 14b wird mit abnehmender Differenz zwischen einer vorbestimmten Solltemperatur des NOₓ₋Speicherkatalysators 10 und der gemessenen Katalysatortemperatur und mit steigendem Temperaturgradienten im NOₓ-Speicherlcatalysator 10 verringert. Unterhalb eines Temperaturgradienten im NOx-Speicherkatalysator 10 von etwa 150 K/min erfolgt noch keine Einengung der Spreizung, während oberhalb einer Katalysatortemperatur von etwa 700 - 770°C, insbesondere etwa 720°C, und/oder eines Temperaturgradienten von mehr als etwa 300 K/min keine Spreizung zwischen den Lambdawerten mehr erfolgt.

Zur Gewährleistung einer optimalen Schadstoffumsetzung wird im Mittel aller Zylinder ein im wesentlichen stöchiometrisches Abgas mit λ ≈ 1 bereitgestellt. Der Sauerstoffgehalt des den Vorkatalysatoren 12 zugeführten Abgases wird hierbei über die in dem jeweiligen Abgaspfad 14a bzw. 14b angeordneten vorgeschalteten Lambdasonden 18 erfaßt und an die (nicht dargestellte) Steuerungseinrichtung zur Überwachung des Sauerstoffgehaltes und zu dessen Steuerung durch geeignete Betriebsweise der Zylinder 1 - 4 weitergeleitet. Zusätzlich hierzu wird der Sauerstoffgehalt des Summenabgases über die in dem Verbindungspfad 14c angeordnete Lambdasonde 18 und die in dem gemeinsamen Abgaspfad 14 angeordneten Lambdasonden 18 überwacht, wobei jedoch bereits eine Überwachung durch eine dieser genannten Lambdasonden 18 ausreichend ist. Es ist jedoch auch möglich, nur einen der beiden parallelen Abgaspfade 14a bzw. 14b mit der jeweils zugeordneten Lambdasonde 18 zu überwachen und die mittlere Abgasqualität oder den Sauerstoffgehalt des Summenabgases über die in dem Verbindungspfad 14c und/oder in dem gemeinsamen Abgaspfad 14 zwischen den Katalysatoren 10 und 12 angeordnete Lambdasonde 18 zu überwachen und über die Steuerungseinrichtung geeignet einzustellen. Hierbei kann sowohl der fett als auch der mager betriebene Vorkatalysator 12 mit einem Abgas beaufschlagt werden, dessen Sauerstoffgehalt einem bestimmten Soll-Lambdawert entspricht, während das dem zugeordneten mager bzw. fett betriebenen Vorkatalysator 12 in dem dazu parallelen Abgaspfäd 14a bzw. 14b zugeführte Abgas auf den gewünschten mittleren Lambdawert geregelt wird. Dem Abgas in dem jeweils geregelten Abgaspfad 14a bzw. 14b kann hierbei über eine Wobble auch eine Zwangsamplitude aufgeprägt werden.

Zur Sicherstellung einer ausreichenden Katalysatorschonung wird nach jedem De-Sulfatierungs- oder Aufheizvorgang die Betriebsweise der Zylinder gewechselt, so daß beim nächsten Aufheizvorgang die fett betriebenen Zylinder 1 und 4 mager und die mager betriebenen Zylinder 2 und 3 fett betrieben und die Vorkatalysatoren somit im zeitlichen Mittel im wesentlichen stöchiometrisch betrieben werden. Es ist jedoch auch möglich, die einmal gewählte Betriebsweise der Zylinder 1-4 im Rahmen eines Aufheizvorgangs beizubehalten und dafür den fett bzw. mager betriebenen Vorkatalysator 12 durch geeignete Wahl der Trägermaterialien, Volumen, Zellgeometrien, Zellzahlen, Trägermaterialsträrken, Washcoats und/oder Beschichtungen speziell für eine hohe Schadstoffumsetzung bei fettem bzw. magerem Betrieb auszulegen. Kriterien für diese spezielle Auslegung können beispielsweise eine gute HC-Konvertierung im Magerbetrieb oder eine gute partielle HC → CO-Oxidation bei fetter Betriebsweise sein. Ergänzend hierzu können die beiden Abgaspfade 14a und 14b auch so ausgebildet sein, daß sie unterschiedliche Abgaslauflängen zwischen der Brennkraftmaschine 16 und dem jeweiligen Vorkatalysator 12, unterschiedliche Abgasrohrquerschnitte und unterschiedliche Trichterformen aufweisen.

Das beschriebene erfindungsgemäße Verfahren kann sinngemäß auch zur bedarfsgerechten Aufheizung von 3-Wege-Kartalysatoren genutzt werden.

Das erfindungsgemäße Aufheizverfahren für eine Katalysatoreinrichtung 10, 12 wurde obenstehend anhand einer Abgasanlage 10, 12, 14 mit zwei parallel angeordneten Vorkatalysatoren 12 beschrieben, die jeweils über einen zugeordneten Abgaspfad 14a, 14b mit 2 Zylindern 1 und 4 bzw. 2 und 3 einer zugeordneten Brennkraftmaschine 16 verbunden sind. Der Vollständigkeit halber sei jedoch bemerkt, daß der eine Vorkatalysator 12 bei einer unsymmetrischen Zylinderverteitung über den Abgaspfad 14a beispielsweise auch nur mit einem Zylinder 1 verbunden sein kann, währen der andere Vorkatalysator 12 in dem parallelen Abgaspfad 14b von den restlichen drei Zylindern 2 - 4 mit Abgas beaufschlagt wird. Eine entsprechende Abgasanlage gemäß den obigen Ausführungen ist insbesondere für Motoren mit mehr als vier Zylindern von Interesse, bei denen sich die Anzahl möglicher Kombinationen entsprechend erhöht. So ist bei einem 6-Zylinder-Motor beispielsweise eine symmetrische Zylinderaufteilung auf die beiden Abgaspfade 14a, 14b möglich, wobei jeder Abgaspfad 14a bzw. 14b von drei Zylindern mit Abgas beaufschlagt wird. Es ist jedoch auch eine unsymmetrische Aufteilung im Verhältnis 2 zu 4 bzw. 1 zu 5 zwischen den beiden Abgaspfaden denkbar.

Die einzelnen Zylinder 1 -4 der Brennkraftmaschine 16 können über zugeordnete Abgaspfade auch jeweils mit einem Vorkatalysator 12 verbunden sein, wobei die einzelnen Zylinder 1 - 4 je nach Bedarf fett, mager oder stöchiometrisch betrieben werden. Es ist zudem auch eine andere Zuordnung zwischen den Zylindern 1 - 4 und den Vorkatalysatoren 12 möglich, wobei beispielsweise die Abgase zweier Zylinder 1 und 2 in einem gemeinsamen Abgaspfad mit einem zugeordneten Vorkatalysator zusammengefaßt werden, während die restlichen beide Zylinder 3 und 4 jeweils über einen zugeordneten Abgaspfad mit einem Vorkatalysator 12 verbunden sind. Entsprechendes gilt für Brennkraftmaschinen mit mehr als vier Zylindern.

## Patentansprüche

1. Aufheizverfahren für eine einer magerlauffähigen mehrzylindrigen Brennkraftmaschine (16) nachgeschaltete Katalysatoreinrichtung (10, 12) mit einem Hauptkatalysator (10) und parallel geschalteten Vorkatalysatoren (12), die über zugeordnete Abgaspfade (14a, 14b) jeweils nur von einem Teil der Zylinder (1-4) mit Abgas beaufschlagt werden, wobei zumindest einem Vorkatalysator (12) fettes und zumindest einem Vorkatalysator (12) mageres Abgas zugeführt wird und Schadstoffe im Abgas in Abhängigkeit von dem jeweiligen Sauerstoffgehalt des Abgases exotherm auf dem Hauptkatalysator (10) umgesetzt werden,
**dadurch gekennzeichnet,**
**dass** die Lambdawerte der den Vorkatalysatoren (12) jeweils zugeführten Abgase oder eine Spreizung zwischen diesen in Abhängigkeit von einer gewünschten Temperatursteigerung des Hauptkatalysators (10) gesteuert werden, wobei die Differenz oder Spreizung zwischen den Lambdawerten auf einen bestimmten Maximalwert begrenzt wird.

2. Aufheizverfahren nach Anspruch 1, **dadurch gekennzeichnet, daß** der Maximalwert in Abhängigkeit von der Hauptkatalysatortemperatur und/oder dem Temperaturgradienten im Hauptkatalysator (10) und/oder dem Abgasmassenstrom festgelegt wird.

3. Aufheizverfahren nach einem der vorhergehenden Ansprüche, **dadurch gekennzeichnet, daß** die Spreizung zwischen den Lambdawerten bis zu einer Hauptkatalysatortemperatur von 500° C maximal 0,85 - 1,21 beträgt.

4. Aufheizverfahren nach einem der vorhergehenden Ansprüche, **dadurch gekennzeichnet, daß** die Spreizung zwischen den Lambdawerten betriebspunktabhängig so eingestellt wird, daß das Abgas vor dem Hauptkatalysator (10) maximal 4 kW an chemisch umsetzbarer Energie enthält.

5. Aufheizverfahren nach einem der vorhergehenden Ansprüche, **dadurch gekennzeichnet, daß** die Differenz zwischen den Lambdawerten mit abnehmender Differenz zwischen einer bestimmten Soll-Hauptkatalysatortemperatur und der ermittelten Hauptkatalysatortemperatur und/oder mit steigendem Temperaturgradienten im Hauptkatalysator (10) verringert wird.

6. Aufheizverfahren nach Anspruch 5, **dadurch gekennzeichnet, daß** unterhalb eines Temperaturgradienten im Hauptkatalysator (10) von 150 K/min keine Einengung der Spreizung zwischen den Lambdawerten in den einzelnen Abgaspfaden (14a, 14b) erfolgt.

7. Aufheizverfahren nach Anspruch 5, **dadurch gekennzeichnet, daß** oberhalb einer Hauptkatalysatortemperatur von 700 - 770°C und/oder eines Temperaturgradienten von mehr als 300 K/min keine Spreizung zwischen den Lambdawerten in den einzelnen Abgaspfaden (14a, 14b) mehr erfolgt.

8. Aufheizverfahren nach Anspruch 7,**dadurch gekennzeichnet, daß** oberhalb einer Hauptkatalysatortemperatur von mehr als 720°C keine Spreizung mehr erfolgt.

9. Aufheizverfahren nach einem der vorhergehenden Ansprüche, **dadurch gekennzeichnet, dass** die Vorkatalysatoren (12) von einer unterschiedlichen Anzahl an Zylindern (1-4) oder von einzelnen Zylinder (1-4) mit Abgas beaufschlagt werden.

10. Aufheizverfahren nach einem der vorhergehenden Ansprüche, **dadurch gekennzeichnet, daß** im Mittel aller Zylinder (1-4) ein Abgas mit einem im wesentlichen stöchiometrischen Luftverhältnis bereitgestellt wird.

11. Aufheizverfahren nach einem der vorhergehenden Ansprüche, **dadurch gekennzeichnet, daß** in bestimmten zeitlichen Abständen ein Wechsel in der Betriebsweise der Zylinder (1-4) erfolgt.

12. Aufheizverfahren nach einem der vorhergehenden Ansprüche, **dadurch gekennzeichnet, daß** der Wechsel in der Betriebsweise nach ein oder zwei Aufheizvorgängen erfolgt.

13. Aufheizverfahren nach einem der Ansprüche 1 bis 10, **dadurch gekennzeichnet, daß** Vorkatalysatoren (12) verwendet werden, die durch geeignete Wahl der Trägermaterialien und/oder der Volumina und/oder der Zellgeometrien und/oder der Zellzahlen und/oder der Trägermaterialstärken und/oder der Washcoats und/oder der Beschichtungen speziell auf hohe Schadstoff-Umsatzraten bei magerer bzw. fetter Betriebsweise ausgelegt sind.

14. Aufheizverfahren nach Anspruch 13, **dadurch gekennzeichnet, daß** Vorkatalysatoren (12) verwendet werden, die im Hinblick auf eine gute HC-Konvertierung im Magerbetrieb bzw. eine gute partielle HC → CO-Oxidation bei fetter Betriebsweise ausgelegt sind.

15. Aufheizverfahren nach einem der vorhergehenden Ansprüche, **dadurch gekennzeichnet, daß** Abgaspfade (14a, 14b) mit unterschiedlichen Abgaslauffängen zwischen der Brennkraftmaschine (16) und den Vorkatalysatoren (12) und/oder mit unterschiedlichen Querschnitten und/oder unterschiedlichen Trichterformen verwendet werden.

16. Aufheizverfahren nach einem der vorherigen Ansprüche, **dadurch gekennzeichnet, daß** die Abgaspfade (14a, 14b) mit jeweils zugeordneten Lambdasonden (18) überwacht werden.

17. Aufheizverfahren nach einem der vorhergehenden Ansprüche, **dadurch gekennzeichnet, daß** Abgaspfade (14a, 14b) über einen Verbindungspfad (14c) miteinander verbunden sind und über eine in dem Verbindungspfad (14c) angeordnete Lambdasonde (18) überwacht werden.

18. Aufheizverfahren nach einem der vorhergehenden Ansprüche, **dadurch gekennzeichnet, daß** die Abgaspfade (14a, 14b) vor dem Hauptkatalysator (10) zu einem gemeinsamen Abgaspfad (14) zusammengeführt werden.

19. Aufheizverfahren nach Anspruch 18, **dadurch gekennzeichnet, daß** die Zusammenführung benachbart zu den Vorkatalysatoren (12) oder benachbart zu dem Hauptkatalysator (10) erfolgt.

20. Aufheizverfahren nach Anspruch 18 oder 19, **dadurch gekennzeichnet, daß** der mittlere Sauerstoffgehalt in dem gemeinsamen Abgaspfad (14) über zumindest eine dem Hauptkatalysator (10) vor- und/oder nachgeschaltete Lambdasonde (18) überwacht wird.

21. Aufheizverfahren nach einem der vorhergehenden Ansprüche, **dadurch gekennzeichnet, daß** die mageren und fetten Abgase entsprechend betriebener Zylinder (1 und 4 bzw. 2 und 3) jeweils in einem gemeinsamen Abgaspfad (14a bzw. 14b) zusammengeführt und einem zugeordneten Vorkatalysator (12) zugeführt werden.

22. Aufheizverfahren nach einem der vorhergehenden Ansprüche, **dadurch gekennzeichnet, daß** das fette oder magere Abgas in einem Abgaspfad (14a, 14b) auf einen bestimmten Sollwert eingestellt und das magere bzw. fette Abgas in einem zugeordneten parallelen Abgaspfad (14b bzw. 14a) auf einen bestimmten mittleren Lambdawert geregelt wird.

23. Aufheizverfahren nach Anspruch 22, **dadurch gekennzeichnet, daß** die Regelung des Lambda-Wertes im zugeordneten parallelen Abgaspfad (14b bzw. 14a) in Abhängigkeit vom gemessenen Ist-Lambdawert in dem nicht geregelten anderen Abgaspfad (14a bzw. 14b) erfolgt.

24. Aufheizverfahren nach einem der vorhergehenden Ansprüche, **dadurch gekennzeichnet, daß** dem Abgas über einen Wobble eine Zwangsamplitude aufgeprägt wird.

25. Aufheizverfahren nach einem der vorhergehenden Ansprüche, **dadurch gekennzeichnet, daß** als Hauptkatalysator (10) ein NOₓ-Speicherkatalysator oder ein 3-Wegekatalysator verwendet wird.

26. Abgasanlage für eine magerlauffähige mehrzylindrige Brennkraftmaschine (16) mit einem Hauptkatalysator (10) und parallel geschalteten Vorkatalysatoren (12) in jeweils zugeordneten Abgaspfaden (14a, 14b),
**dadurch gekennzeichnet,**
**dass** die Abgaspfade (14a, 14b) durch einen eine Lambdasonde (18) umfassenden Verbindungspfad (14c) miteinander verbunden sind, welcher stromauf einer Zusammenführungsstelle der Abgaspfade (14a, 14b) angeordnet ist.

27. Abgasanlage nach Anspruch 26, **dadurch gekennzeichnet, daß** die Abgaspfade (14a, 14b) vor dem Hauptkatalysator (10) zu einem gemeinsamen Abgaspfad (14) zusammengeführt sind, der vor und/oder hinter dem Hauptkatalysator (10) zumindest eine Lambdasonde (18) umfaßt.

28. Abgasanlage nach Anspruch 26 oder 27, **dadurch gekennzeichnet, daß** die Abgaspfade (14a, 14b) unterschiedliche Abgaslauflängen zwischen der Brennkraftmaschine (16) und den Vorkatalysatoren (12) und/oder unterschiedliche Querschnitte und/oder unterschiedliche Trichterformen aufweisen.

29. Abgasanlage nach einem der Ansprüche 26 bis 28, **dadurch gekennzeichnet, daß** die parallelen Abgaspfade (14a, 14b) mit einer unterschiedlichen Anzahl an Zylinder (1-4) oder mit einzelnen Zylindern (1-4) verbunden sind.

30. Abgasanlage nach einem der Ansprüche 26 bis 29, **dadurch gekennzeichnet, daß** den Katalysatoren (10, 12) Temperaturfühler vor- und/oder nachgeschaltet sind.

31. Abgasanlage nach einem der Ansprüche 26 bis 30, **dadurch gekennzeichnet, daß** die Vorkatalysatoren (12) durch geeignete Wahl der Trägermaterialien und/oder der Zellzahlen und/oder der Trägermaterialstärken und/oder der Washcoats und/oder der Beschichtungen speziell auf hohe Schadstoff-Umsatzraten bei magerer bzw. fetter Betriebsweise ausgelegt sind.

32. Abgasanlage nach einem der Ansprüche 26 bis 31, **dadurch gekennzeichnet, daß** der Hauptkatalysator (10) einen NOₓ-Speicherkatalysator oder einen 3-Wegekatalysator umfaßt.

33. Abgasanlage nach einem der Ansprüche 26 bis 32, **gekennzeichnet durch** eine Einrichtung zur Bestimmung der Beladung des Hauptkatalysators (10) mit Schwefel und/oder Stickoxiden und eine zugeordnete Steuerungseinrichtung zur selektiven oder gruppenweisen Ansteuerung der Zylinder (1-4) der Brennkraftmaschine (16) in Abhängigkeit von der ermittelten Beladung des Hauptkatalysators (10) mit Schwefel und/oder Stickoxiden, der aktuellen Fahrsituation, der ordnungsgemäßen Funktionsweise sicherheits- oder abgasrelevanter Bauteile, dem Schadstoff- und Sauerstoffgehalt des Abgases, der Höhe des Abgasmassenstroms, dem aktuellen Temperaturverlauf in der Katalysatoreinrichtung (10, 12) und einer gewünschten Soll-Hauptkatalysatortemperatur.

## Claims

1. Heating method for a catalytic converter device (10, 12) which is connected downstream of a multi-cylinder internal combustion engine (16) which is capable of lean running, said catalytic converter device (10, 12) having a main catalytic converter (10) and primary catalytic converters (12) which are connected in parallel and to which exhaust gas is applied from only some of the cylinders (1-4) via associated exhaust gas paths (14a, 14b), with rich exhaust gas being fed to at least one primary catalytic converter (12) and lean exhaust gas being fed to at least one primary catalytic converter (12), and pollutants in the exhaust gas being converted exothermally on the main catalytic converter (10) as a function of the respective oxygen content of the exhaust gas, **characterized in that** the lambda values of the exhaust gases which are respectively fed to the primary catalytic converters (12) or a spread between them is controlled as a function of a desired rise in temperature of the main catalytic converter (10), with the difference or spread between the lambda values being limited to a specific maximum value.

2. Heating method according to Claim 1, **characterized in that** the maximum value is defined as a function of the main catalytic converter temperature and/or the temperature gradient in the main catalytic converter (10) and/or the exhaust gas mass flow.

3. Heating method according to one of the preceding claims, **characterized in that** the spread between the lambda values up to a main catalytic converter temperature of 500°C is at maximum 0.85 - 1.21.

4. Heating method according to one of the preceding claims, **characterized in that** the spread between the lambda values is set as a function of the operating point in such a way that the exhaust gas receives a maximum of 4 kW of chemically convertible energy upstream of the main catalytic converter (10).

5. Heating method according to one of the preceding claims, **characterized in that** the difference between the lambda values is reduced as the difference between specific setpoint main catalytic converter temperature and the determined main catalytic converter temperature and/or as the temperature gradient in the main catalytic converter (10) increases.

6. Heating method according to Claim 5, **characterized in that** there is no restriction of spread between the lambda values in the individual exhaust gas paths (14a, 14b) below a temperature gradient in the main catalytic converter (10) of 150 K/min.

7. Heating method according to Claim 5, **characterized in that** there is no spread between the lambda values in the individual exhaust gas paths (14a, 14b) anymore above a main catalytic converter temperature of 700 - 770°C and/or a temperature gradient of more than 300 K/min.

8. Heating method according to Claim 7, **characterized in that** there is no spread anymore above a main catalytic converter temperature of more than 720°C.

9. Heating method according to one of the preceding claims, **characterized in that** the primary catalytic converters (12) have exhaust gas applied to them from a different number of cylinders (1-4) or from individual cylinders (1-4).

10. Heating method according to one of the preceding claims, **characterized in that**, averaged over all the cylinders (1-4), an exhaust gas is made available with an essentially stoichiometric air ratio.

11. Heating method according to one of the preceding claims, **characterized in that** a changeover in the operating mode of the cylinders (1-4) takes place at specific time intervals.

12. Heating method according to one of the preceding claims, **characterized in that** the changeover in the operating mode takes place after one or two heating processes.

13. Heating method according to one of Claims 1 to 10, **characterized in that** primary catalytic converters (12) are used which are configured specifically for high pollutant conversion rates for a lean or rich operating mode by suitably selecting the carrier materials and/or the volumes and/or the cell geometries and/or the cell numbers and/or the carrier material strengths and/or the wash coats and/or the coatings.

14. Heating method according to Claim 13, **characterized in that** primary catalytic converters (12) are used which are configured for good HC conversion in the lean operating mode or good partial HC → CO oxidation in the rich operating mode.

15. Heating method according to one of the preceding claims, **characterized in that** exhaust gas paths (14a, 14b) with different exhaust gas running lengths between the internal combustion engine (12) and the primary catalytic converters (12) and/or with different cross sections and/or different funnel shapes are used.

16. Heating method according to one of the preceding claims, **characterized in that** the exhaust gas paths (14a, 14b) are monitored with respect to the assigned lambda probes (18).

17. Heating method according to one of the preceding claims, **characterized in that** exhaust gas paths (14a, 14b) are connected to one another via a connecting path (14c), and are monitored by means of a lambda probe (18) which is arranged in the connecting path (14c).

18. Heating method according to one of the preceding claims, **characterized in that** the exhaust gas paths (14a, 14b) are combined to form a common exhaust gas path (14) upstream of the main catalytic converter (10).

19. Heating method according to Claim 18, **characterized in that** the combination takes place adjacent to the primary catalytic converters (12) or adjacent to the main catalytic converter (10).

20. Heating method according to Claim 18 or 19, **characterized in that** the average oxygen content in the common exhaust gas path (14) is monitored by means of at least one lambda probe (18) which is connected upstream and/or downstream of the main catalytic converter (10).

21. Heating method according to one of the preceding claims, **characterized in that** the lean and rich exhaust gases of correspondingly operated cylinders (1 and 4 or 2 and 3) are each combined in a common exhaust gas path (14a or 14b) and fed to an assigned primary catalytic converter (12).

22. Heating method according to one of the preceding claims, **characterized in that** the rich or lean exhaust gas in an exhaust gas path (14a, 14b) is set to a specific setpoint value, and the lean or rich exhaust gas in an assigned, parallel exhaust gas path (14b or 14a) is adjusted to a specific average lambda value.

23. Heating method according to Claim 22, **characterized in that** the lambda value in the assigned parallel exhaust gas path (14b or 14a) is controlled as a function of the measured actual lambda value in the other exhaust gas path (14a or 14b) which is not adjusted.

24. Heating method according to one of the preceding claims, **characterized in that** a forced amplitude is impressed on the exhaust gas by means of a wobble.

25. Heating method according to one of the preceding claims, **characterized in that** an NOₓ storage-type catalytic converter or a 3-way catalytic converter is used as the main catalytic converter (10).

26. Exhaust gas system for a multi-cylinder internal combustion engine (16) which is capable of lean running and which has a main catalytic converter (10) and primary catalytic converters (12) which are connected in parallel in respectively assigned exhaust gas paths (14a, 14b), **characterized in that** exhaust gas paths (14a, 14b) are connected to one another by means of a connecting path (14c) which comprises a lambda probe (18) and which is arranged upstream of a combination point of the exhaust gas paths (14a, 14b).

27. Exhaust gas system according to Claim 26, **characterized in that** the exhaust gas paths (14a, 14b) are combined upstream of the main catalytic converter (10) to form a common exhaust gas path (14) which comprises at least one lambda probe (18) upstream and/or downstream of the main catalytic converter (10).

28. Exhaust gas system according to Claim 26 or 27, **characterized in that** the exhaust gas paths (14a, 14b) have different exhaust gas running lengths between the internal combustion engine (16) and the primary catalytic converters (12) and/or different cross sections and/or different funnel shapes.

29. Exhaust gas system according to one of Claims 26 to 28, **characterized in that** the parallel exhaust gas paths (14a, 14b) are connected to a.different number of cylinders (1-4) or to individual cylinders (1-4).

30. Exhaust gas system according to one of Claims 26 to 29, **characterized in that** temperature sensors are arranged upstream and/or downstream of the catalytic converters (10, 12).

31. Exhaust gas system according to one of Claims 26 to 30, **characterized in that** the primary catalytic converters (12) are configured specifically for high pollutant conversion rates for a lean or rich operating mode by suitably selecting the carrier materials and/or the cell numbers and/or the carrier material thicknesses and/or the wash coats and/or the coatings.

32. Exhaust gas system according to one of Claims 26 to 31, **characterized in that** the main catalytic converter (10) comprises an NOₓ storage-type catalytic converter or a 3-way catalytic converter.

33. Exhaust gas system according to one of Claims 26 to 32, **characterized by** a device for determining the charging of the main catalytic converter (10) with sulphur and/or nitrogen oxides and an assigned control device for selective actuation or group actuation of the cylinders (1 - 4) of the internal combustion engine (16) as a function of the determined charging of the main catalytic converter (10) with sulphur and/or nitrogen oxides, the current driving situation, the satisfactory functioning mode of safety-related or exhaust-gas-related components, the pollutant content and oxygen content of the exhaust gas, the level of the exhaust gas mass flow rate, the current temperature profile in the catalytic converter device (10, 12) and a desired setpoint main catalytic converter temperature.

## Revendications

1. Procédé pour chauffer un dispositif de catalyse (10, 12) raccordé en aval d'un moteur à combustion interne (16) à plusieurs cylindres et apte à fonctionner en conditions pauvres, qui comprend un catalyseur principal (10) et des précatalyseurs (12) montés en parallèle et dont chacun n'est alimenté en gaz d'échappement que par certains des cylindres (1-4) par l'intermédiaire de parcours de gaz d'échappement (14a, 14b) qui y sont associés, dans lequel du gaz d'échappement riche est amené à au moins l'un des précatalyseurs (12) et du gaz d'échappement pauvre est amené à au moins l'un des précatalyseurs (12), les substances nocives présentes dans le gaz d'échappement réagissant de manière exothermique dans le catalyseur principal (10) en fonction de la teneur en oxygène du gaz d'échappement particulier, **caractérisé en ce que** les valeurs lambda des gaz d'échappement amenés à chacun des précatalyseurs (12) ou un étalement entre ces valeurs sont commandés en fonction d'une augmentation souhaitée de la température du catalyseur principal (10), la différence ou l'étalement entre les valeurs lambda étant limités à une valeur maximale définie.

2. Procédé de chauffage selon la revendication 1, **caractérisé en ce que** la valeur maximale est définie en fonction de la température du catalyseur principal, du gradient de température dans le catalyseur principal (10) et/ou du débit massique de gaz d'échappement.

3. Procédé de chauffage selon l'une des revendications précédentes, **caractérisé en ce que** jusqu'à une température du catalyseur principal de 500°C, l'étalement des valeurs lambda est compris au maximum entre 0,85 et 1,21.

4. Procédé de chauffage selon l'une des revendications précédentes, **caractérisé en ce que** l'étalement des valeurs lambda est réglé en fonction du point de fonctionnement de telle sorte qu'en amont du catalyseur principal (10), le gaz d'échappement contienne au maximum 4 kW d'énergie convertible chimiquement.

5. Procédé de chauffage selon l'une des revendications précédentes, **caractérisé en ce que** la différence entre les valeurs lambda diminue quand la différence entre une température définie de consigne du catalyseur principal et la température mesurée du catalyseur principal décroît et/ou quand le gradient de température croît dans le catalyseur principal (10).

6. Procédé de chauffage selon la revendication 5, **caractérisé en ce que** l'étalement des valeurs lambda dans les différents parcours de gaz d'échappement (14a, 14b) n'est pas rétréci lorsque le gradient de température dans le catalyseur principal (10) n'atteint pas 150 K/min.

7. Procédé de chauffage selon la revendication 5, **caractérisé en ce qu'**il n'y a plus d'étalement des valeurs lambda dans les différents parcours de gaz d'échappement (14a, 14b) lorsque la température du catalyseur principal est de 700 à 770°C et/ou quand le gradient de température est supérieur à 300 K/min.

8. Procédé de chauffage selon la revendication 7, **caractérisé en ce qu'**il n'y a plus d'étalement lorsque la température du catalyseur principal dépasse 720°C.

9. Procédé de chauffage selon l'une des revendications précédentes, **caractérisé en ce que** les précatalyseurs (12) sont alimentés en gaz d'échappement par un nombre différent de cylindres (1-4) ou par des cylindres (1-4) distincts.

10. Procédé de chauffage selon l'une des revendications précédentes, **caractérisé en ce que** le gaz d'échappement amené aux cylindres (1-4) présente en moyenne un rapport d'air essentiellement stoechiométrique.

11. Procédé de chauffage selon l'une des revendications précédentes, **caractérisé en ce que** le mode de fonctionnement des cylindres (1-4) change à intervalles de temps définis.

12. Procédé de chauffage selon l'une des revendications précédentes, **caractérisé en ce que** le changement de mode de fonctionnement a lieu après une ou deux opérations de chauffage.

13. Procédé de chauffage selon l'une des revendications 1 à 10, **caractérisé en ce qu'**on utilise des précatalyseurs (12) qui, moyennant une sélection appropriée des matériaux de support, du volume, de la géométrie et/ou du nombre des alvéoles, de l'épaisseur du matériau de support, de l'imprégnateur et/ou des revêtements, sont spécialement adaptés à des taux élevés de conversion des substances nocives en conditions de fonctionnement pauvres ou riches.

14. Procédé de chauffage selon la revendication 13, **caractérisé en ce qu'**on utilise des précatalyseurs (12) étudiés pour assurer une bonne conversion des HC en conditions pauvres ou une bonne oxydation partielle des HC en CO en conditions riches.

15. Procédé de chauffage selon l'une des revendications précédentes, **caractérisé en ce qu'**entre le moteur à combustion (16) et les précatalyseurs (12), on utilise des parcours de gaz d'échappement (14a, 14b) de longueurs, de sections transversales et/ou de formes d'entonnoir différentes.

16. Procédé de chauffage selon l'une des revendications précédentes, **caractérisé en ce que** les parcours de gaz d'échappement (14a, 14b) sont surveillés au moyen de sondes lambda (18) respectives qui leur sont associées.

17. Procédé de chauffage selon l'une des revendications précédentes, **caractérisé en ce que** des parcours de gaz d'échappement (14a, 14b) sont reliés l'un à l'autre au moyen d'un parcours de liaison (14c) et sont surveillés par une sonde lambda (18) agencée dans le parcours de liaison (14c).

18. Procédé de chauffage selon l'une des revendications précédentes, **caractérisé en ce que** les parcours de gaz d'échappement (14a, 14b) se rejoignent en un parcours de gaz d'échappement commun (14) en amont du catalyseur principal (10).

19. Procédé de chauffage selon la revendication 18, **caractérisé en ce que** la jonction a lieu au voisinage des précatalyseurs (12) ou du catalyseur principal (10).

20. Procédé de chauffage selon les revendications 18 ou 19, **caractérisé en ce que** la teneur moyenne en oxygène dans le parcours commun de gaz d'échappement (14) est surveillée par au moins une sonde lambda (18) située en amont et/ou en aval du catalyseur principal (10).

21. Procédé de chauffage selon l'une des revendications précédentes, **caractérisé en ce que** les gaz d'échappement pauvres ou riches des cylindres en fonctionnement (1 et 4 ou 2 et 3) sont rassemblés dans un parcours commun de gaz d'échappement (14a ou 14b) et sont amenés à un précatalyseur associé (12).

22. Procédé de chauffage selon l'une des revendications précédentes, **caractérisé en ce que** le gaz d'échappement riche ou pauvre d'un parcours de gaz d'échappement (14a, 14b) est ajusté à une valeur définie de consigne et **en ce que** le gaz d'échappement pauvre ou riche dans un parcours de gaz d'échappement parallèle associé (14b ou 14a) est régulé à une valeur lambda moyenne définie.

23. Procédé de chauffage selon la revendication 22, **caractérisé en ce que** dans le parcours de gaz d'échappement parallèle (14b ou 14a), la valeur lambda est régulée en fonction de la valeur lambda effective mesurée dans l'autre parcours de gaz d'échappement (14a ou 14b) associé et non régulé.

24. Procédé de chauffage selon l'une des revendications précédentes, **caractérisé en ce que** l'on imprime une amplitude fixe au gaz d'échappement au moyen d'une excursion de fréquence.

25. Procédé de chauffage selon l'une des revendications précédentes, **caractérisé en ce que** le catalyseur principal (10) est un catalyseur à accumulation de NOₓ ou un catalyseur à 3 voies.

26. Installation de gaz d'échappement pour un moteur à combustion (16) à plusieurs cylindres apte à fonctionner en conditions pauvres, qui présente un catalyseur principal (10) et des précatalyseurs (12) montés en parallèle dans les parcours respectifs de gaz d'échappement (14a, 14b) qui leur sont associés, **caractérisée en ce que** les parcours de gaz d'échappement (14a, 14b) sont reliés l'un à l'autre par un parcours de liaison (14c) qui comprend une sonde lambda (18) et qui est agencé en amont d'un emplacement de jonction des parcours de gaz d'échappement (14a, 14b).

27. Installation de gaz d'échappement selon la revendication 26, **caractérisée en ce qu'**en amont du catalyseur principal (10), les parcours de gaz d'échappement (14a, 14b) se rejoignent en un parcours commun de gaz d'échappement (14) qui comprend au moins une sonde lambda (18) en amont et/ou en aval du catalyseur principal (10).

28. Installation de gaz d'échappement selon les revendications 26 ou 27, **caractérisée en ce qu'**entre le moteur à combustion (16) et les précatalyseurs (12), les parcours de gaz d'échappement (14a, 14b) présentent différentes longueurs, sections transversales et/ou formes en entonnoir.

29. Installation de gaz d'échappement selon l'une des revendications 26 à 28, **caractérisée en ce que** chacun des parcours de gaz d'échappement parallèles (14a, 14b) est relié à un nombre différent de cylindres (1-4) ou à des cylindres (1-4) distincts.

30. Installation de gaz d'échappement selon l'une des revendications 26 à 29, **caractérisée en ce que** des détecteurs de température sont agencés en amont et/ou en aval des catalyseurs (10, 12).

31. Installation de gaz d'échappement selon l'une des revendications 26 à 30, **caractérisée en ce que**, par une sélection appropriée de la nature de support, du nombre d'alvéoles et de l'épaisseur des matériaux de support, de l'imprégnateur et/ou des revêtements, les précatalyseurs (12) sont spécialement adaptés à des taux élevés de conversion des substances nocives en conditions de fonctionnement pauvres ou riches.

32. Installation de gaz d'échappement selon l'une des revendications 26 à 31, **caractérisée en ce que** le catalyseur principal (10) comprend un catalyseur à accumulation de NOₓ ou un catalyseur à 3 voies.

33. Installation de gaz d'échappement selon l'une des revendications 26 à 32, **caractérisée par** un dispositif de détermination de la charge en soufre et/ou en oxydes d'azote du catalyseur principal (10) et un dispositif associé de commande qui commande sélectivement ou collectivement les cylindres (1-4) du moteur à combustion (16) en fonction de la charge définie du catalyseur principal (10) en soufre et/ou en oxydes d'azote, des conditions de roulage, du fonctionnement correct des composants qui concernent la sécurité ou le gaz d'échappement, des teneurs en substances nocives et en oxygène du gaz d'échappement, du niveau de débit massique de gaz d'échappement, de l'évolution effective de la température dans le dispositif de catalyse (10, 12) et de la température de consigne que l'on souhaite dans le catalyseur principal.
